(19) Europäisches Patentamt
European Patent Office
Office européen des brevets

(11) EP 0 699 892 B1

(12) **EUROPEAN PATENT SPECIFICATION**

(45) Date of publication and mention
of the grant of the patent:
**16.07.1997 Bulletin 1997/29**

(51) Int Cl.⁶: **G01C 19/72**, G02B 6/44

(21) Application number: **95116673.5**

(22) Date of filing: **24.11.1992**

(54) **Multilayer fiber optic coil**

Faseroptische Mehrlagenspule

Bobine à fibre optique multi-couches

(84) Designated Contracting States:
**DE FR GB IT NL SE**

(30) Priority: **25.11.1991 US 797342**
**04.09.1992 US 940974**

(43) Date of publication of application:
**06.03.1996 Bulletin 1996/10**

(62) Application number of earlier application in
accordance with Art. 76 EPC: **93900828.0**

(73) Proprietors:
• **HONEYWELL INC.**
**Minneapolis Minnesota 55408 (US)**
• **BERGH, Ralph A.**
**Phoenix, AZ 85022 (US)**

(72) Inventors:
• **Bergh, Ralph A.**
**Phoenix, Arizona 85022 (US)**

• **Goettsche, Randy P.**
**Phoenix, AZ 85027 (US)**

(74) Representative: **Rentzsch, Heinz, Dipl.-Ing. et al**
**Honeywell Holding AG,**
**Patent- und Lizenzabteilung,**
**Kaiserleistrasse 39**
**63067 Offenbach (DE)**

(56) References cited:
**EP-A- 0 292 103**          **US-A- 4 781 461**
**US-A- 4 856 900**

• **PATENT ABSTRACTS OF JAPAN vol. 012, no.**
**240 (P-727), 8 July 1988 & JP-A-63 033612**
**(TOSHIBA CORP), 13 February 1988,**
• **PATENT ABSTRACTS OF JAPAN vol. 014, no.**
**101 (P-1012), 23 February 1990 & JP-A-01 305310**
**(JAPAN AVIATION ELECTRON IND LTD), 8**
**December 1989,**

## Description

The present invention relates to fiber optic coils and, more particularly, to fiber optic coils used in rotation sensors, as may be used for an advanced global positioning and inertial guidance system.

Optical rotation sensing devices include ring laser gyros, fiber optic rotation sensors, and the like. The fiber optic rotation sensor ordinarily comprises an interferometer which includes a light source, a beam splitter, a detector, and a light path which is mounted on a rotatable platform. Light from the light source is split by the beam splitter into two beams which are directed to opposite ends of the optical path and which then counterpropagate around that path. The light beams exit the light path, the light beams are recombined, and the resulting combined light beam is sensed by a detector. A sensing circuit connected to the detector determines any phase difference between the counterpropagating light beams.

Assuming that this fiber optic rotation sensor experiences no rotation, ideally no difference in phase between the counterpropagating light beams will be detected. On the other hand, if the sensor experiences rotation, there will be a phase difference between the counterpropagating light beams which can be detected to indicate the extent and direction of rotation.

In a fiber optic rotation sensor, an optical fiber is coiled, usually in multiple layers, around a spool, with each layer containing multiple turns. Currently, such coils are typically wound as quadrupoles. In order to form a quadrupole coil, each half of a continuous optical fiber is first wound onto respective intermediate spools. The first spool is then used to wind a first layer of turns in a clockwise direction around a sensor spool. This first layer is wound around the sensor spool from the first end to the second end of the sensor spool. The second spool is then used to wind a second layer of turns in a counter-clockwise direction around a sensor spool. This second layer is wound around the sensor spool from the first end to the second end of the sensor spool. The fiber on the second spool is then wound back from the second end to the first end of the sensor spool to form a third layer. The first spool is then used to wind a fourth layer of turns from the second end of the spool to the first end. Thus, one half (i.e. one end) of the optical fiber is used to form the first and fourth layers of turns and the other half (i.e. the other end) is used to form the second and third layers. These four layers of turns are usually referred to as a quadrupole. If "+" and "-" are used to designate the first and second halves or ends of the optical fiber respectively, this quadrupole is wound with + - - + layers. The quadrupole is repeated for as many layers as is desired for the optical path. Accordingly, a second quadrupole will be wound with + - - + layers about the first quadrupole so that the resulting two quadrupole arrangement will have a + - - + + - - + layer configuration.

When a fiber optic coil wound in this fashion is subjected to an axial and/or radial time varying temperature gradient, there will be a phase difference between the counterpropagating light beams which results in a false indication of rotation; that is, this phase difference is an error which produces a false indication of rotation.

This error can be substantially reduced by employing reverse quadrupoles for the sensor coil. One of the first quadrupoles is wound using the first end of the fiber to wind the first layer, the second end to wind the second and the third layers, and the first end to wind the fourth layer. An adjacent quadrupole is then wound by reversing the winding sequence; that is, the second end of the fiber is used to wind the fifth layer, the first end to wind the sixth and seventh layers, and the second end to wind the eighth layer. These two reverse quadrupoles are referred to herein as an octupole. This octupole materially reduces axial time varying temperature gradient dependent errors and substantially eliminates radial time varying temperature gradient dependent errors. Accordingly, an octupole with + - - + - + + - layers results in a marked improvement over prior art coils.

The axial time varying temperature gradient dependent errors can be substantially eliminated by winding a reverse octupole as it is described in more detail in copending application 93 900 828.0 published as WO-A-93/11406. In this case, a ninth layer is wound using the second end, the tenth and eleventh layers are wound using the first end, the twelfth layer is wound using the second end, the thirteenth layer is wound using the first end, the fourteenth and fifteenth layers are wound using the second end and the sixteenth layer is wound using the first end. This reversed octupole arrangement is wound with + - - + - + + - - + + - + - - + winding configuration for a total of 16 layers.

Alternatively, according to the present invention as characterized in claim 1, time varying temperature gradient dependent errors are substantially eliminated by axially displacing extra lengths of the first and second ends from one another. For example, after the coil is wound, extra turns of the first and second ends may be wound around the octupole outer circumference so that the extra turns of the first end are axially displaced from the extra turns of the second end. The number and placement of these extra turns may be selected to eliminate these errors. Preferred embodiments are described in the dependent claims.

These and other features will become more apparent from a detailed consideration of the invention when taken in junction with the drawings in which:

Figure 1 shows a prior art fiber optic coil arrangement;

Figure 2 shows an arrangement for substantially eliminating axial time varying temperature gradient dependent errors of the prior art coil arrangement shown in Fig. 1;

Figure 3 shows a reverse quadrupole fiber optic coil arrangement;

Figure 4 shows a reverse quadrupole fiber optic coil having trimming turns around the outside circumference thereof in order to substantially eliminate axial time varying temperature gradient dependent errors; and

Figure 5 shows an optical fiber useful in winding the coil according to the present invention.

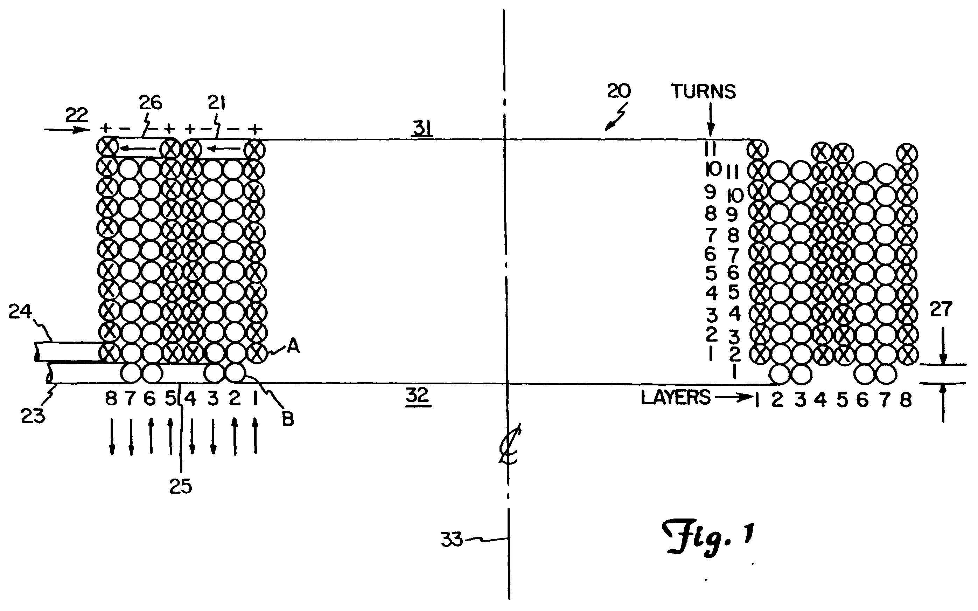

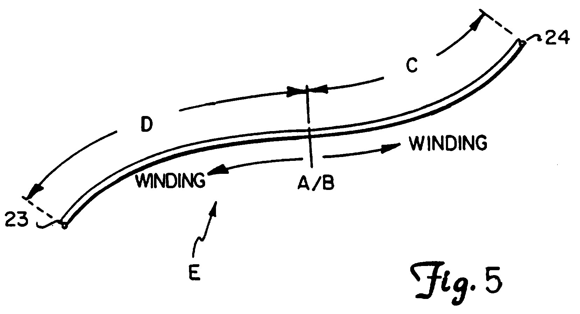

Shown in Figure 1 is a typical quadrupole fiber optic coil of the type disclosed in US-A 4 856 900 or of the type shown in Japanese patent application 61-176805, published as JP-A-63-33612. The quadrupole coil of US-A-4,856,900 provides at the end of each quadrupole winding three concentric turns above the end turn of the winding. These three concentric turns are fixed to the adjacent flange of the spool by an adhesive coating and constitute a barrier of one turn thickness for the next winding. Therewith the formation of micro bends is prevented which otherwise would cause a degradiation of the extinction ratio of the light beams and therewith would complicate the analysis of signals generated by the sensor coil. Coil 20 in Figure 1 is wound using the ends of a continuous optical fiber, such as the optical fiber shown in Figure 5. Accordingly, layer 1 is wound clockwise from near the middle A/B of the fiber E using first end C. Layer 1 is wound in an upward direction as viewed in Figure 1, i.e. each turn in the layer is formed above its preceding turn. When the desired number of turns of layer 1 are wound, layer 2 is wound counterclockwise from near the middle A/B of the fiber E using second end D. Layer 2 is wound in an upward direction as viewed in Figure 1. At end 31 of coil 20, counterclockwise winding of the second end D continues in a downward direction to wind layer 3. The first end C is bridged over to layer 4 by way of loop 21 and layer 4 is wound clockwise in the downward direction. Layer 5 is wound clockwise, using the first end C, in the upward direction. The second end D of the fiber E is bridged from layer 3 to layer 6 by way of loop 25 and layers 6 and 7 are wound counterclockwise in the directions of the arrows. The first end C of the fiber E is bridged from layer 5 to layer 8 by way of loop 26 and layer 8 is wound clockwise in the direction of the arrow from end 31 to end 32 of coil 20. As can be seen in Figure 1, the turns with the "X" indicate the first end C of the fiber which is wound in one of the clockwise or counterclockwise directions and the turns without the "X" indicate the second end D of the fiber which is wound in the other of the clockwise or counterclockwise directions. These layers, for convenience, are indicated with "+" and "-" symbols at 22 in order to indicate which end of the fiber is used to wind the layer as well as the relative direction of winding. Layers 1-4 form a first quadrupole and layers 5-8 form a second quadrupole. As shown in Figure 1, the two quadrupoles have the same + - - + winding configuration.

As the arrows in Figure 5 indicate, winding of layers 1 and 2 begins near the middle A/B of the fiber and proceeds, in the direction of the Figure 5 arrows, from the middle A/B toward extremities 24 and 23 respectively.

Extremity 23 of the second end D of the fiber is brought out of coil 20 and extremity 24 of the first end C of the fiber is also brought out of coil 20. Two light beams, which are used to counterpropagate along the path provided by the optical fiber E, are injected into respective extremities 23 and 24. One light beam, injected into extremity 23, propagates in order through layers 7, 6, 3, 2, 1, 4, 5 and 8 to exit extremity 24. The other light beam, injected into extremity 24, counterpropagates in order through layers 8, 5, 4, 1, 2, 3, 6 and 7 to exit extremity 23. The exiting light beams are recombined and are sensed by a detector so that the phases can be compared.

As can be seen from the right-hand side of Figure 1, because of the way in which quadrupole fiber optic coils are wound, the "+" and "-" layers are offset by an axial distance 27. As a result of the winding process, this axial distance can be one fiber diameter as shown, a fraction of a fiber diameter, or several fiber diameters. Because of this axial spatial offset, if an axial time varying thermal gradient is applied to the fiber optic coil, turns of the "+" layers see a slightly different rate of temperature change than do the corresponding turns of the "-" layers. That is, turn 1 of layer 1 is offset from turn 1 of layer 2 by the amount 27, turn 2 of layer 1 is offset from turn 2 of layer 2 by the amount, and so on. It can be seen that, because the "-" half of the coil is spatially offset from the "+" half of the coil, there is a slightly different rate of temperature change that is experienced by the counter-propagating light beams travelling through corresponding turns of the "+" and "-" halves of the coil. (The coil halves of coil 20 are (1) all of the "+" turns which are wound in the clockwise direction and (2) all of the "-" turns are wound in the counterclockwise direction). Consequently, the counterpropagating light beams travel through different path lengths, which results in a phase difference between the light beams. This phase difference is defined herein as an error because it is not related to rotation of the rotation sensor.

The time varying temperature gradient can be given by the following equation:

$$\frac{\Delta T_{ax}}{\Delta t} = \frac{\Delta T_{31}}{\Delta t} - \frac{\Delta T_{32}}{\Delta t} \qquad (1)$$

where $\Delta T_{31}/\Delta t$ is the rate of temperature change at end 31 of the coil, $\Delta T_{32}/\Delta t$ is the rate of temperature change at end 32 of the coil, and $\Delta T_{ax}/\Delta t$ is the axial difference between the rates of temperature change at the two ends of the coil. The difference d in the rates of temperature change between corresponding turns of the "+" and "-" layers (which are separated by distance 27) is $\Delta T_{ax}/\Delta t$ divided by the number of turns in a layer. Although this difference d is quite small, the effect of this small difference accumulates over an entire coil half and becomes relatively large. The accumulation of this effect over the entire coil produces a phase difference between the counterpropagating beams which will result in a relatively large false indication of rotation.

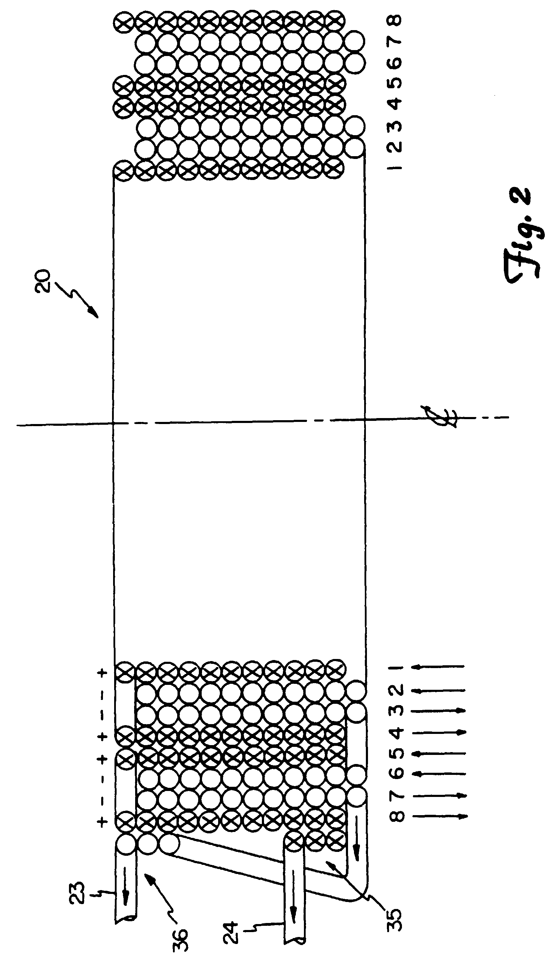

One manner of reducing this axial time varying temperature gradient dependent error is to axially displace extra lengths of the first and second ends of the fiber from one another. For example, as shown in Figure 2, after layer 8 has been wound with the "+" end of the fiber, the "+" end of the fiber is wound around the outside diameter of coil 20 by a predetermined number of turns 35. Similarly, the "-" end of the fiber is wound around the outside diameter by a predetermined number of turns 36. The extra turns 35 and 36 are axially displaced from one another. The predetermined number of trimming turns 35 and 36 can be selected to minimize the error resulting from the axial time varying temperature gradient experienced by the coil 20. Specifically, light beams can be injected into extremities 23 and 24 with coil 20 mounted on a stationary, stable platform and an axial time varying temperature gradient can be applied to the coil. The counterpropagating light beams exiting extremities 23 and 24 can be combined and the phase difference sensed. Turns 35 and 36 can then be wound until the error, which results from an axial time varying temperature gradient acting on the spatial displacement of the two halves of the coil, is minimized.

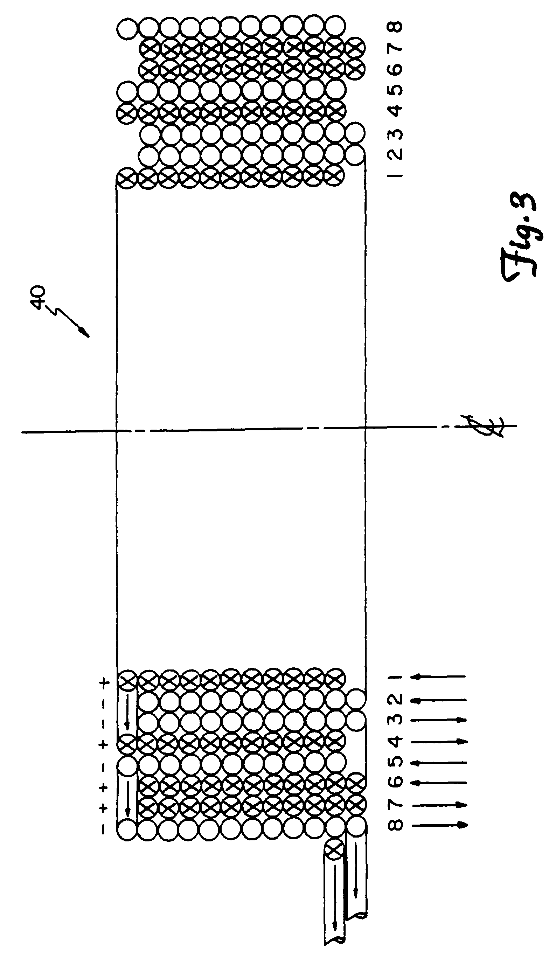

Axial time varying temperature gradient dependent errors can also be materially reduced if the coil 40 as shown in Figure 3 is wound using reversed quadrupoles. That is, the quadrupole comprising layers 1-4 is wound with a + - - + layer configuration whereas the second quadrupole comprising layers 5-8 is wound with a - + + - layer configuration. Specifically, the "+" end of the optical fiber, starting near the middle A/B of the fiber E, is used to wind layer 1, the "-" end is used to wind layers 2 and 3, and the "+" end is used to wind layer 4, the "-" end is used to wind layer 5, the "+" end is use to wind layers 6 and 7, and the "-" end is used to wind layer 8. Layers 1, 4, 6 and 7 may be wound in the clockwise direction and layers 2, 3, 5 and 8 may be wound in the counterclockwise direction. It can be seen that the spatial axial offset with respect to the "+" and "-" layers of the first quadrupole (layers 1-4) is reversed with respect to the "+" and "-" layers of the second quadrupole (layers 5-8). The axial sensitivity to time varying temperature gradients is reduced because the spatial asymmetry with respect to the "+" and "-" halves of the coils shown in Figs. 1 and 2 is eliminated. Thus, although the error resulting from an axially oriented time varying temperature gradient has not been eliminated, it has been materially reduced and in many cases is tolerable. Moreover, error resulting from a radially oriented time varying temperature gradient is substantially eliminated.

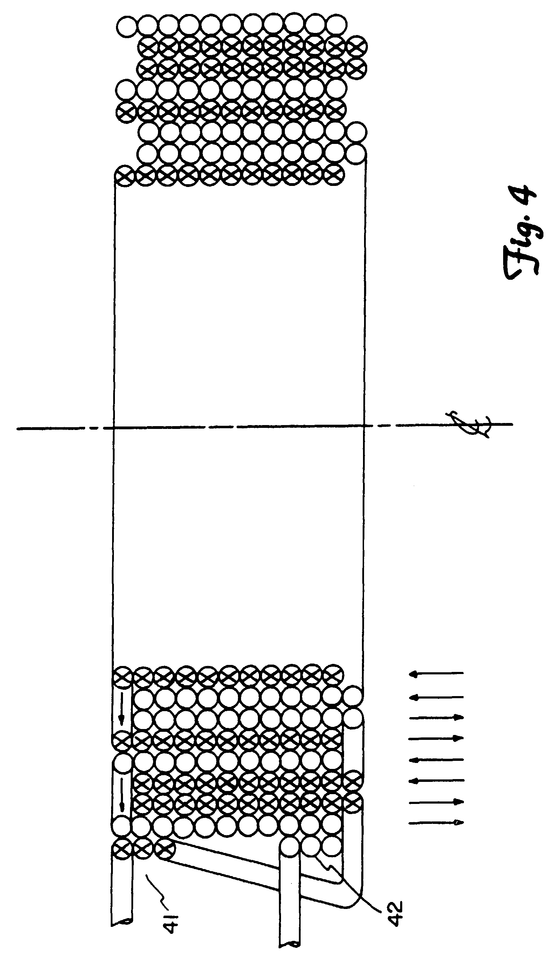

This reduced error resulting from an axially oriented time varying temperature gradient, according to the present invention, can be substantially eliminated by the trimming turns 41 and 42 shown in Figure 4, having the same effect as the trimming turns described above with reference to Figure 2.

**Claims**

1. A multilayer fiber optic coil for a fiber optic rotation sensor comprising a plurality of windings formed from an optical fiber, the windings constituting an optical path from a first end of the optical fiber to a second end of the optical fiber, the fiber optic coil further comprising a first extra length (35, 42) and a second extra length (36, 41) of optical fiber axially displaced from each other and wound around the outside perimeter of said coil (20) such as to reduce axial time varying temperature gradient dependent errors between phases of light counterpropagating through said optical fiber.

2. The multilayer fiber optic coil of claim 1, wherein the windings are wound from an optical fiber (E) having a left end (D) and a right end (C), wherein the windings are wound starting with a point (A/B) along the optical fiber between the left side and the right sides of the optical fiber, wherein each layer of the multilayer coil (20, 40) is wound from one of the left and right ends (D, C) of the optical fiber outwardly from the axis (33) of the coil.

**Patentansprüche**

1. Mehrlagige faseroptische Spule für einen faseroptischen Rotationsfühler mit mehreren, aus einer optischen Faser hergestellten Wicklungen, welche einen optischen Weg bilden, der sich von einem ersten Ende zu einem zweiten Ende der optischen Faser erstreckt, und wobei die faseroptische Spule ferner ein erstes Zusatzstück (35, 42) sowie ein zweites Zusatzstück (36, 41) aus optischer Faser aufweist, welche derart im axialen Abstand voneinander angeordnet und um den Außendurchmesser der Spule (20) herumgewickelt sind, daß Phasenfehler des in Gegenrichtung durch die optische Faser laufenden Lichts, welche durch einen axialen zeitveränderlichen Temperaturgradienten verursacht sind, vermindert werden.

2. Faseroptische Mehrlagenspule nach Anspruch 1, wobei die Wicklungen aus einer optischen Faser (E) mit einem linken Ende (D) sowie einem rechten Ende (C) gewickelt sind, wobei das Wickeln an einem Punkt (A/B) der optischen Faser zwischen dem linken und dem rechten Ende der optischen Faser beginnt und jede Lage der mehrlagigen Spule (20, 40) aus einem der linken und rechten Enden (D, C) der optischen Faser von der Spulenachse (33) ausgehend nach außen gewickelt ist.

**Revendications**

1. Une bobine à fibre optique multicouches pour un capteur de rotation à fibre optique comprenant une pluralité de bobinages formés à partir d'une fibre optique, les bobinages constituant un trajet optique à partir d'une première extrémité de la fibre optique jusqu'à une seconde extrémité de la fibre optique, la bobine à fibre optique comprenant, en outre, une première longueur supplémentaire (35, 42) et une deuxième longueur supplémentaire (36, 41) de fibre optique, déplacées axialement l'une par rapport à l'autre et bobinées autour du périmètre extérieur de ladite bobine (20), de manière à réduire les erreurs dépendant du gradient de température variant dans le temps axial entre les phases de lumière contre-propagées par ladite fibre optique.

2. La bobine à fibre optique multicouches selon la revendication 1, dans laquelle les bobinages sont bobinés à partir d'une fibre optique (E) comprenant une extrémité gauche (D) et une extrémité droite (C), dans laquelle les bobinages sont bobinés à partir d'un point (A/B) le long de la fibre optique entre le côté gauche et le côté droit de la fibre optique, dans laquelle chaque couche de la bobine multicouches (20, 40) est enroulée à partir de l'une des extrémités gauche et droite (D, C) de la fibre optique, vers l'extérieur, à partir de l'axe (33) de la bobine.

EP 0 699 892 B1

22  26  21

+ - + + - - +

31  20  TURNS

11
10  11
9   10
8   9
7   8
6   7
5   6
4   5
3   4
2   3
1   2
    1

24

A

8 7 6 5 4 3 2 1  B

32  LAYERS → 1 2 3 4 5 6 7 8

27

23

25

33  ₵

*Fig. 1*

Fig. 2

EP 0 699 892 B1

EP 0 699 892 B1

− + + − + − − +

8 7 6 5 4 3 2 1

1 2 3 4 5 6 7 8

40

Fig. 3

Fig. 4

Fig. 5